# EUROPÄISCHE PATENTSCHRIFT

(11) **EP 2 466 089 B1**
(45) Veröffentlichungstag und Bekanntmachung des Hinweises auf die Patenterteilung: **11.01.2017**
(21) Anmeldenummer: 11191368.7
(22) Anmeldetag: 30.11.2011
(51) Int. Cl.: F02B 29/04

(54) **Ladeluftkühler**
Charge air cooler
Refroidisseur d'air de suralimentation

(30) Priorität: 16.12.2010 DE 102010063265
(43) Veröffentlichungstag der Anmeldung: 20.06.2012
(73) Patentinhaber: Mahle International GmbH, 70376 Stuttgart (DE)
(72) Erfinder: Bauer, Swen-Juri, 70374 Stuttgart (DE); Beez, Steve, 98666 Masserberg (DE); Grüner, Andreas, 73110 Hattenhofen (DE); Janßen, Martin, 70195 Stuttgart (DE); Jensen, Hans, 73265 Dettingen (DE); Teubner, Andrea, 73492 Rainau-Schwabsberg (DE); Knauß, Rüdiger, 71394 Kernen i.R. (DE)
(74) Vertreter: BRP Renaud & Partner mbB Rechtsanwälte Patentanwälte Steuerberater

(56) Entgegenhaltungen:
- DE-A1-102008 032 816
- DE-A1-102008 053 802
- US-A1- 2002 189 255
- US-A1- 2009 056 355

## Beschreibung

Die vorliegende Erfindung betrifft einen Ladeluftkühler eines Verbrennungsmotors gemäß dem Oberbegriff des Anspruchs I. Die Erfindung betrifft außerdem einen mit einem derartigen Ladeluftkühler ausgestatteten Verbrennungsmotor.

Aus der EP 1 795 847 A 2 ist ein gattungsgemäßer Ladeluftkühler bekannt, der aus Flachrohren, Wellrippen, Sammelkästen und Anschlussstutzen zusammengesetzt ist, wobei die Einzelteile des Ladeluftkühlers aus Aluminium hergestellt und miteinander verlötet sind. Um die Anzahl der Einzelteile des Ladeluftkühlers reduzieren zu können und dadurch eine bessere Herstellbarkeit zu erreichen, wurde ein von Parallelstromkondensatoren bekanntes Bauprinzip auf den Ladeluftkühler übertragen, indem dieser in einem von der Ladeluft durchströmbaren Gehäuse angeordnet ist.

Aus der EP 1 785 609 A1 ist ein weiterer Ladeluftkühler bekannt, in dessen Gehäuse Ladeluft ein- und ausströmt und dadurch den Ladeluftkühler durchströmt. Das Gehäuse weist dabei eine Montageöffnung auf, in die der Ladeluftkühler einsetzbar und mit seiner Anschlussplatte zu befestigen ist. Hierdurch soll insbesondere erreicht werden, dass der Ladeluftkühler mit dem Gehäuse eine konstruktive Einheit bildet, die stabiler gegen Schwingungen und Vibrationen sein soll.

Aus der WO 2005/001366 A3 sowie der DE 10 2007 043 992 B4 sind weitere Ladeluftkühler bekannt.

Nachteilig bei dem bekannten Stand der Technik ist, dass der Ladeluftkühler jeweils als separates Bauteil in einen Kühlkreislauf, beispielsweise eines

Verbrennungsmotors, eingebaut ist und ohne separate Pumpe nicht betrieben werden kann.

US 2002/0189255 A1 offenbart einen Ladeluftkühler mit einer integrierten Kühlmittelpumpe.

Die vorliegende Erfindung beschäftigt sich mit einem Problem, für einen Ladeluftkühler der gattungsgemäßen Art eine verbesserte oder zumindest eine alternative Ausführungsform anzugeben, die sich insbesondere durch eine kompakte Bauform auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, in einen an sich bekannten indirekten Ladeluftkühler für den Ansaugtrakt eines Verbrennungsmotors mit Anschlussstutzen zum Anschluss an einen eigenen, Kühlmittel führenden Niedertemperatur-Kühlkreislauf zugleich eine Kühlmittelpumpe zum Fördern bzw. Umwälzen des Kühlmittels zu integrieren und dadurch eine separate Montage derselben, verbunden mit einem erhöhten Bauraumbedarf und einem erhöhten Montageaufwand, zu vermeiden. Durch die Integration der Kühlmittelpumpe in den Ladeluftkühler ist es somit möglich, eine insgesamt deutlich kompaktere Bauweise zu erreichen, was insbesondere im Hinblick auf ein stetig schrumpfendes Platzangebot in modernen Motorräumen von großem Vorteil ist. Die Kühlmittelpumpe kann dabei selbstverständlich derart in den Ladeluftkühler integriert sein, dass diese, beispielsweise zu Wartungszwecken, einfacher zu entnehmen bzw. auszutauschen ist.

Wenn die Kühlmittelpumpe in einen Kühlmittelsammelbehälter des Ladeluftkühlers integriert ist, bietet dies den großen Vorteil, dass der Kühlmittelsammelbehälter eine Art Kühlmittelsumpf bildet, in welchen die Kühlmittelpumpe hineinragt, wodurch sichergestellt werden kann, dass diese ausschließlich Kühlmittel fördert und nicht etwa Luft. Der Kühlmittelsammelbehälter ist zudem vorzugsweise derart angeordnet, dass er zu Wartungszwecken leicht zugänglich ist, so dass auch eine Wartung der Kühlmittelpumpe vergleichsweise einfach möglich ist. Die Kühlmittelpumpe kann in diesem Fall in eine am Kühlmittelsammelbehälter angeordnete Ausnehmung eingesteckt werden, beispielsweise verschraubt bzw. verclipst werden, wodurch sich die Montage der Kühlmittelpumpe am Kühlmittelsammelbehälter zusätzlich vereinfacht. Die Ausnehmung kann wie beispielsweise der gesamte Kühlmittelsammelbehälter aus Kunststoff, insbesondere als Kunststoffspritzgussteil, ausgebildet sein, wodurch eine einerseits kostengünstige und andererseits qualitativ sehr hochwertige Fertigung des Kühlmittelsammelbehälters und damit auch des Ladeluftkühlers möglich ist. Alternativ kann der Kühlmittelsammelbehälter auch aus anderen geeigneten Materialien wie z.B. Aluminium gefertigt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
Fig. 1 einen Verbrennungsmotor mit einem erfindungsgemäßen Ladeluftkühler,
Fig. 2 den erfindungsgemäßen Ladeluftkühler vor einem Einbau in einen Ladeluftkanal,
Fig. 3 einzelne Komponenten des erfindungsgemäßen Ladeluftkühlers.

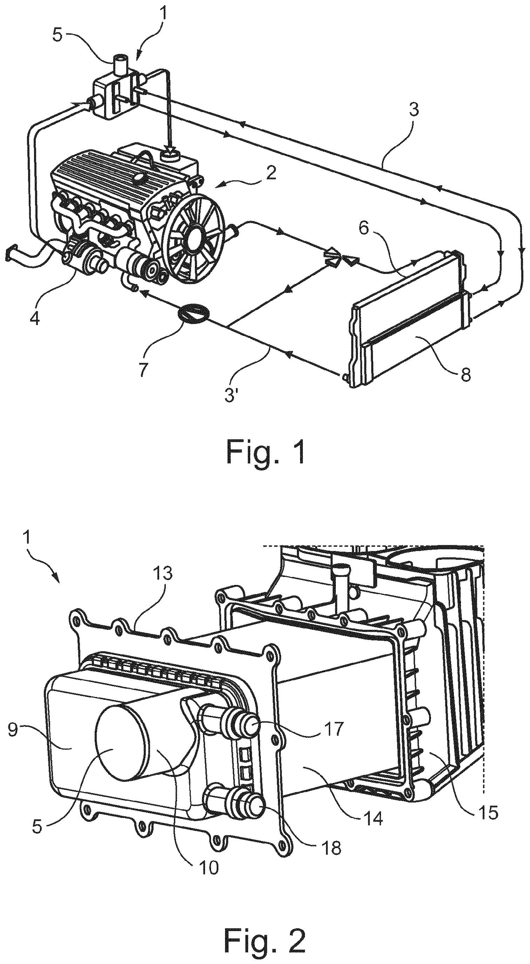

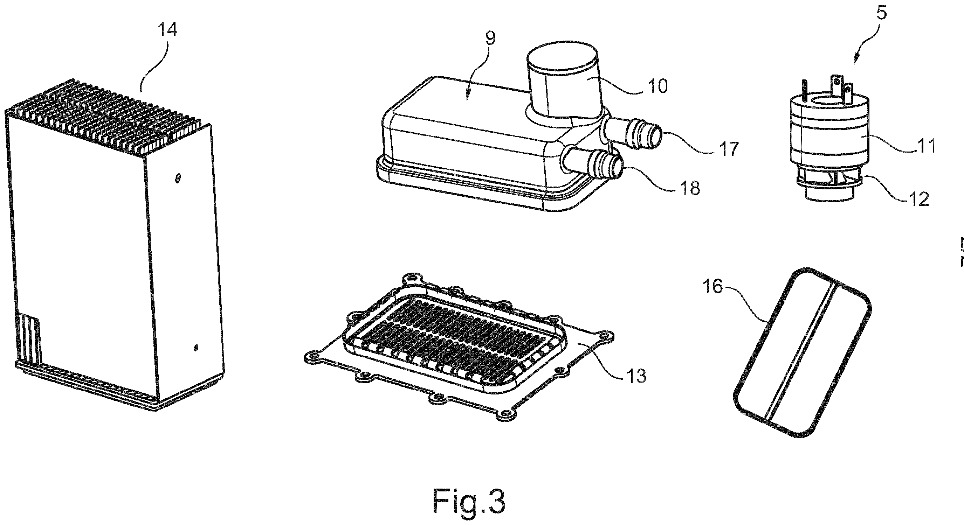

Entsprechend der Figur 1, ist ein erfindungsgemäßer indirekter Ladeluftkühler 1 eines Verbrennungsmotors 2 in einen Niedertemperatur-Kühlreislauf 3 eingebunden. Der Ladeluftkühler 1 dient dabei zur Kühlung eines verdichteten Ladeluftstroms, der von einem Abgasturbolader 4 bereitgestellt wird. Bisher war im Kühlkreislauf 3 an beliebiger Stelle eine Kühlmittelpumpe zum Fördern des im Kühlkreislauf 3 vorhandenen Kühlmittels erforderlich. Beim erfindungsgemäßen Ladeluftkühler 1 ist nun eine Kühlmittelpumpe 5 (vgl. auch die Figuren 2 und 3) direkt in den Ladeluftkühler 1 integriert. Betrachtet man die Figur 1, so kann man erkennen, dass prinzipiell zwei unterschiedliche Kühlmittelkreisläufe 3 und 3' vorgesehen sind, wobei der Haupt-Kühlmittelkreislauf 3' zur Kühlung des Verbrennungsmotors 2 verwendet wird. Hierzu ist in den Kühlmittelkreislauf 3' ein Hauptkühler 6 integriert, wobei das Kühlmittel im Kühlmittelmittelkreislauf 3' von einer separaten Kühlmittelpumpe 7 umgewälzt wird. Die beiden Kühlreisläufe 3 und 3' sind dabei separat zueinander ausbildet, das heißt, es besteht keine fluidtechnische Verbindung zwischen den beiden.

Zum Kühlen des Kühlmittels im Niedertemperatur-Kühlkreislauf 3 ist ein Nebenkühler 8 vorgesehen, dessen Kühlleistung im Vergleich zum Hauptkühler 6 üblicherweise geringer ist. Durch die Integration der Kühlmittelpumpe 5 in den Ladeluftkühler 1 muss diese nicht mehr separat zum Ladeluftkühler 1 im Verlauf des Kühlmittelkreislaufes 3 an anderer Stelle angeordnet werden, wodurch zum einen ein vorteilhafter Package-Effekt erzielt wird und damit ein Bauraumbedarf gesenkt werden kann. Zum anderen lässt sich auch ein Montageaufwand erheblich reduzieren, da die Kühlmittelpumpe 5 bereits vorab in den Ladeluftkühler 1 eingebaut und zusammen mit diesem in den Kühlmittelkreislauf 3 integriert werden kann. Eine separate Montage der Kühlmittelpumpe 5 an anderer Stelle im Kühlmittelkreislauf 3 kann dadurch entfallen.

Betrachtet man die Figuren 2 und 3, so kann man erkennen, dass die Kühlmittelpumpe 5 in einen Kühlmittelsammelbehälter 9, kurz auch Wasserkasten genannt, integriert ist. Der Kühlmittelsammelbehälter 9 ist dabei in der Art eines Kühlmittelsumpfes ausgelegt, wodurch gewährleistet werden kann, dass die Kühlmittelpumpe 5 stets von Kühlmittel umgeben ist. Zur Montage der Kühlmittelpumpe 5 im Kühlmittelsammelbehälter 9 weist Letzterer eine Ausnehmung 10 auf, in welche die Kühlmittelpumpe 5 dicht eingesteckt und leicht befestigt, insbesondere verschraubt oder verclipst werden kann. Der Kühlmittelsammelbehälter 9 ist dabei vorzugsweise aus Kunststoff, insbesondere als Kunststoffspritzteil, ausgebildet und dadurch einerseits kostengünstig und andererseits qualitativ hochwertig herstellbar. Da der erfindungsgemäße indirekte flüssigkeitsgekühlte Ladeluftkühler 1 in einem eigenen vom Hauptmotorkühlkreislauf getrennten Niedertemperaturkreislauf vorgesehen ist, kann der Kühlmittelsammelbehälter aus Kunststoff sein. Betrachtet man die Figur 3, so kann man erkennen, dass die Kühlmittelpumpe 5 einen Elektromotor 11 als Antrieb aufweist, an dessen Rotor ein Laufrad 12 drehfest angeordnet ist. Das Laufrad 12 bildet dabei zusammen mit einer Innenwandung der Ausnehmung 10 des Kühlmittelsammelbehälters 9 die Kühlmittelpumpe 5. Des Weiteren ist der Kühlmittelsammelbehälter 9 über eine Adapterplatte 13 (vgl. die Figuren 2 und 3), mit einer Wärmetauschereinrichtung 14 verbunden, wobei die Wärmetauschereinrichtung 14 in einen Ladeluftkanal 15 (vgl. Figur 2) ragt und von zu kühlender Ladeluft umströmt ist.

Der Ladeluftkühler 1 besteht aus vielen parallel angeordneten, kühlmitteldurch strömten Flachrohren 20. Es gibt zwei nebeneinander stehende Reihen von Kühlmittelrohren. Der Kühler hier ist u-förmig durchströmt, daher befindet sich an dem der Adapterplatte 13 gegenüberliegenden Ende eine Endplatte 21 in der die Strömung des Kühlmittels umgelenkt wird. Das heißt durch die eine Reihe von Kühlmittelrohren 20 strömt das Kühlmittel nach unten und durch die andere Reihe nach Umlenkung in der Endplatte 21 wieder nach oben. Die Kühlmittelrohre 20 sind üblicherweise mit der Adapterplatte 13 und der Endplatte verlötet. Zusätzlich gibt es noch Leitbleche 22 die um die Kühlmittelrohre 20 herum angeordnet sind. Zwischen je zwei Kühlmittelrohen 20 sind in der Regel hier nicht gezeigte sogenannte geschnittene Lamellen angeordnet um die Leistung des Ladeluftkühlers 1 zu optimieren.

Eine Befestigung des Ladeluftkühlers 1 am Ladeluftkanal 15 erfolgt dabei über die Adapterplatte 13, beispielsweise mittels einer Verschraubung derselben am Ladeluftkanal 15. Selbstverständlich ist zwischen der Adapterplatte 13 und dem Ladeluftkanal 15 noch eine entsprechende nicht gezeigte Dichtung angeordnet. Die Dichtung 16 liegt zwischen Adapterplatte 13 und Kühlmittelsammelbehälter 9 und sorgt für eine Dichte Abtrennung des in den Ladeluftkühler 1 einströmenden Kühlmittels und des ausströmenden Kühlmittels. Der Kühlmittelsammelbehälter 9 wird mittels Verklammerung an der Adapterplatte 13 befestigt. In den Kühlmittelsammelbehälter 9 ebenfalls integriert ist ein Anschlussstutzen (Zulauf) 17 sowie ein Ablauf 18 für das zu fördernde Kühlmittel.

Die Position der Kühlmittelpumpe 5 kann sowohl wie in der Fig. 3 gezeigt auf der Abströmseite, als auch auf der Zuströmseite im Kühlmittelsammelbehälter 9 vorgesehen werden.

Mit dem erfindungsgemäßen Ladeluftkühler 1 ist es somit möglich, diesen bauraumoptimiert und zugleich wartungsfreundlich in den Kühlmittelkreislauf 3 zu integrieren. Zusätzlich kann auf ein separates Gehäuse für die Kühlmittelpumpe 5, welches erfindungsgemäß durch den Kühlmittelsammelbehälter 9 gebildet wird, verzichtet werden, wodurch eine Reduzierung der Teilevielfalt sowie eine Reduzierung des Montageaufwandes erzielt werden können.

## Patentansprüche

1. Ladeluftkühler (1) im Ansaugtrakt eines Verbrennungsmotors (2), mit Anschlussstutzen (17,18) zum Anschluss an einen Kühlmittel führenden Kühlkreislauf (3), wobei in den Ladeluftkühler (1) eine Kühlmittelpumpe (5) zum Fördern des Kühlmittels integriert ist, wobei
- die Kühlmittelpumpe (5) in einen Kühlmittelsammelbehälter (9) des Ladeluftkühlers (1) integriert ist,
**dadurch gekennzeichnet, dass**
- am Kühlmittelsammelbehälter (9) eine Ausnehmung (10) angeordnet ist, in welche die Kühlmittelpumpe (5) eingesteckt ist,
- ein Gehäuse der Kühlmittelpumpe (5) durch den Kühlmittelsammelbehälter (9) gebildet ist,
- ein Laufrad (12) zusammen mit einer Innenwandung der Ausnehmung (10) des Kühlmittelsammelbehälters (9) die Kühlmittelpumpe (5) bildet.

2. Ladeluftkühler nach Anspruch 1,
**dadurch gekennzeichnet,**
**dass** der Kühlmittelsammelbehälter (9) aus Kunststoff, insbesondere als Kunststoffspritzgussteil, ausgebildet ist.

3. Ladeluftkühler nach Anspruch 1 oder 2,
**dadurch gekennzeichnet,**
**dass** der Kühlmittelsammelbehälter (9) über eine Adapterplatte (13) an eine Wärmetauschereinrichtung (14) angeschlossen ist, wobei die Wärmetauschereinrichtung (14) in einen Ladeluftkanal (15) ragt und von zu kühlender Ladeluft umströmt ist.

4. Ladeluftkühler nach einem der Ansprüche 1 bis 3,
**dadurch gekennzeichnet,**
**dass** die Kühlmittelpumpe (5) einen Elektromotor (11) aufweist.

5. Verbrennungsmotor (2) mit einem Ladeluftkühler (1) nach einem der Ansprüche 1 bis 4.

## Claims

1. Charge air cooler (1) in an intake tract of an internal combustion engine (2), with connecting nozzles (17, 18) for connection to a coolant conveying cooling circuit (3), wherein in the charge air cooler (1) a coolant pump (5) is integrated for conveying the coolant, wherein
- the coolant pump (5) is integrated into a coolant collecting container (9) of the charge air cooler (1),
**characterized in that**
- on the coolant collecting container (9) a recess (10) is arranged, into which the coolant pump (5) is inserted,
- a housing of the coolant pump (5) is formed by the coolant collecting container (9),
- an impeller (12) together with an inner wall of the recess (10) of the coolant collecting container (9) forms the coolant pump (5).

2. Charge air cooler according to claim 1,
**characterized in**
**that** the coolant collecting container (9) is made of plastic, in particular of plastic injection moulding.

3. The charge air cooler according to claim 1 or 2,
**characterized in**
**that** the coolant collecting container (9) is connected via an adapter plate (13) to a heat exchanger device (14), wherein the heat exchanger device (14) protrudes in a charge air channel (15) where cooling charge air flows around it.

4. Charge air cooler according to any one of claims 1 to 3,
**characterized in**
**that** the coolant pump (5) comprises an electric motor (11).

5. Internal combustion engine (2) with a charge air cooler (1) according to any one of claims 1 to 4.

## Revendications

1. Refroidisseur d'air de suralimentation (1) dans le système d'admission d'un moteur à combustion interne (2), comprenant des tubulures de raccordement (17, 18) destinées à être raccordées à un circuit de refroidissement (3) guidant un liquide de refroidissement, dans lequel une pompe de liquide de refroidissement (5) servant à refouler le liquide de refroidissement est intégrée dans le refroidisseur d'air de suralimentation (1), dans lequel
- la pompe de liquide de refroidissement (5) est intégrée dans un contenant de collecte de liquide de refroidissement (9) du refroidisseur d'air de suralimentation (1),
**caractérisé en ce que**
- un évidement (10) est disposé au niveau du récipient de collecte de liquide de refroidissement (9), dans lequel la pompe de liquide de refroidissement (5) est enfichée,
- un boîtier de la pompe de liquide de refroidissement (5) est formé par le contenant de collecte de liquide de refroidissement (9),
- une roue mobile (12) forme conjointement avec une paroi intérieure de l'évidement (10) du contenant de collecte de liquide de refroidissement (9) la pompe de liquide de refroidissement (5).

2. Refroidisseur d'air de suralimentation selon la revendication 1,
**caractérisé en ce**
**que** le contenant de collecte de liquide de refroidissement (9) est réalisé à partir de plastique, en particulier sous la forme d'une pièce de moulage par injection en plastique.

3. Refroidisseur d'air de suralimentation selon la revendication 1 ou 2,
**caractérisé en ce**
**que** le contenant de collecte de liquide de refroidissement (9) est raccordé, par l'intermédiaire d'une plaque d'adaptation (13), à un système échangeur de chaleur (14), dans lequel le système échangeur de chaleur (14) dépasse dans un canal d'air de suralimentation (15) et est entouré de toutes parts par de l'air de suralimentation à refroidir.

4. Refroidisseur d'air de suralimentation selon l'une quelconque des revendications 1 à 3,
**caractérisé en ce**
**que** la pompe de liquide de refroidissement (5) présente un moteur électrique (11).

5. Moteur à combustion interne (2) comprenant un refroidisseur d'air de suralimentation (1) selon l'une quelconque des revendications 1 à 4.
